# EUROPEAN PATENT APPLICATION

(11) **EP 1 684 492 A2**
(43) Date of publication of application: **26.07.2006**
(21) Application number: 06001246.5
(22) Date of filing: 20.01.2006
(51) Int. Cl.: H04M 1/60

(54) **Wireless headset apparatus and operation method thereof**

(30) Priority: 21.01.2005 KR 2005005992
(71) Applicant: Samsung Electronics Co., Ltd., Suwon-si, Gyeonggi-Do (KR)
(72) Inventor: Lee, Chang-Ho, c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a wireless headset apparatus (200) and an operation method thereof. A separate earphone (235) is connected to a wireless headset so that the user can listen to a voice through both the earphone and a built-in speaker (230) included in the wireless headset. When the connected earphone includes a microphone (235b), the function of a built-in microphone (225) included in the wireless headset is interrupted, and a voice is received through the microphone included in the connected earphone, so that the user can smoothly communicate even when the user moves to a noisy area where the communication environment is poor.

## Description

The present invention relates to a wireless headset apparatus used for a mobile terminal, and an operation method thereof.

Recently, mobile terminals have been constructed to enable the user to use and control his/her own mobile terminal via a wireless headset. For instance, the user of a mobile terminal can use a wireless headset in order to communicate in a hands-free state, when it is difficult for the user to hold the mobile terminal (such as a portable terminal) by hand. Generally, such a wireless headset is connected to a mobile terminal by a wireless communication technology, such as a Bluetooth, so that the user can communicate in a hands-free state.

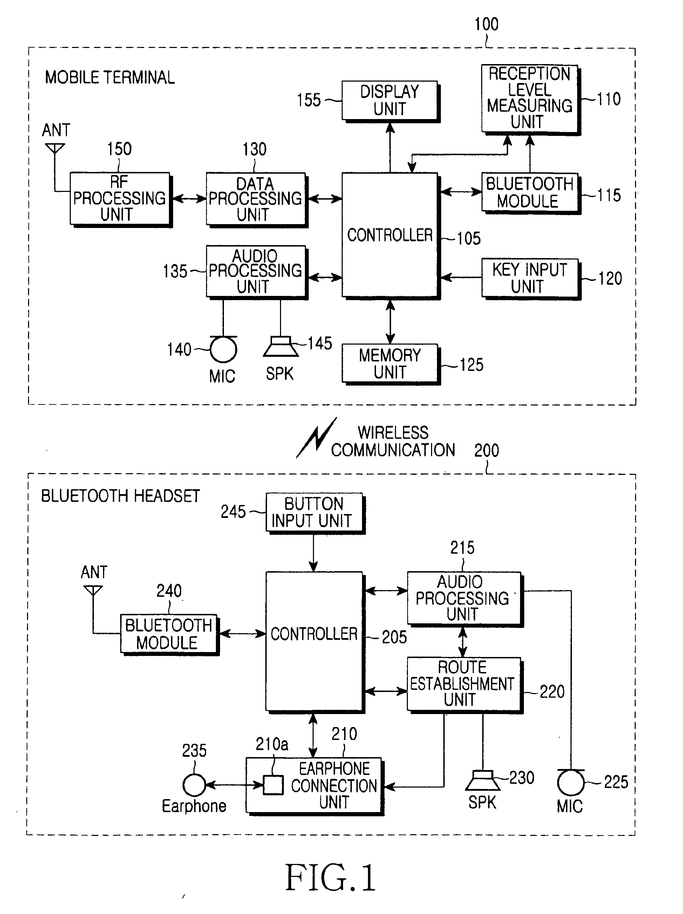

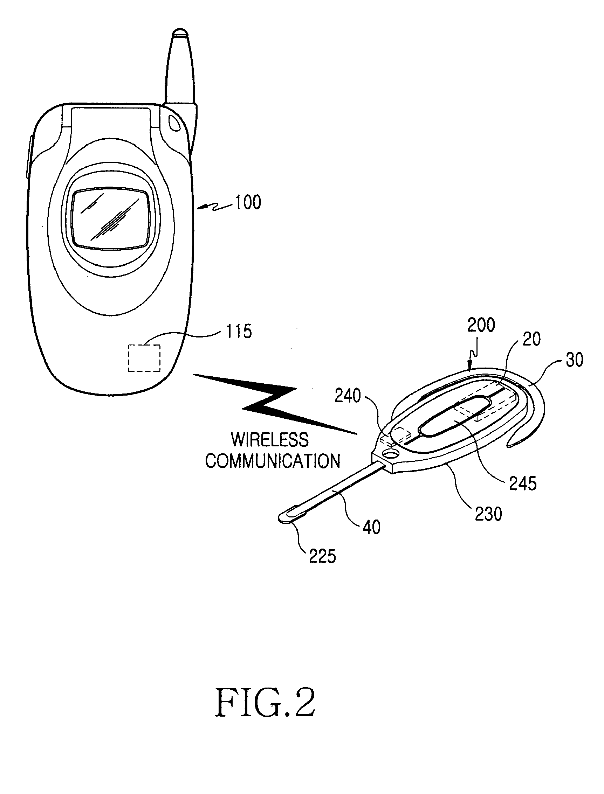

The operation method of a Bluetooth headset will now be described with reference to FIG. 2 and with reference to certain elements of Fig. 1. Bluetooth modules 115 and 240 are included in a mobile terminal 100 and a Bluetooth headset 200, respectively. Therefore, a communication signal, such as a signal reporting transmission/reception of a call, are bi-directionally transmitted/received through the Bluetooth modules 115 and 240. The Bluetooth headset 200 includes a microphone 225, a built-in speaker 230, a communication on/off switch 245, and a Bluetooth module 240 installed within the main body of the Bluetooth headset 200. The Bluetooth headset 200 is provided at a lower portion thereof with a rod 40 equipped with the microphone 225. The body of the Bluetooth headset 200 also includes a hook 30 to be worn behind a user's ear. In addition, in order to operate the Bluetooth headset 200, a battery, such as a rechargeable battery 20, is contained within the Bluetooth headset 200.

According to the communication method using the conventional Bluetooth headset 200, when receiving a call, a controller 105 of the mobile terminal transmits a signal for notifying the Bluetooth headset of the reception of a call through the Bluetooth module 115 contained within the mobile terminal. After this, the user, wearing the Bluetooth headset on a user's ear by using the hook 30, and attempts communication by adjusting the on/off button 245 included in the Bluetooth headset 200. A controller 205 of the Bluetooth headset receives a voice signal from the user through the microphone 225 provided at a lower end of the rod 40. Also, the user can listen to a voice output through the built-in single speaker 230 of the Bluetooth headset 200. That is, the user uses one ear to listen to a voice output through the single speaker contained in the Bluetooth headset, which is a monaural speaker system, while leaving the other ear exposed to the outside. Accordingly, during communication, when the user moves to a noisy area, or an area where communication quality is poor, a voice output through the speaker is heard at a relatively lower volume, or the communication sensitivity is degraded due to noise. In this case, there is a limitation when communicating in that only a finite increase of volume is possible because the output power of the speaker is limited. Consequently, when the user is in an area where the communication environment is poor, it is difficult for the user to communicate.

Accordingly, the present invention has been made to solve the above-mentioned problems occurring in the prior art.

It is the object of the present invention to provide a wireless headset apparatus and an operation method thereof, which includes a speaker installed in a wireless headset and a separate earphone to be connected to the wireless headset so that the user can listen to a voice simultaneously through both the speaker and the earphone, thereby enabling the user to smoothly make communication even when the user moves to an area where the communication environment is poor.

This object is solved by the subject matter of the independent claims.

Preferred embodiments are defined in the dependent claims.

To accomplish this object, in accordance with one aspect of the present invention, there is provided a wireless headset apparatus including an earphone connection unit including an earphone connection hole, to which an earphone can be connected, so as to output a sense signal when the earphone is connected to the earphone connection hole; a route establishment unit for establishing either a first route to output a voice to only a built-in speaker or a second route to output a voice to both the built-in speaker and the earphone connection unit depending on a control signal, and for interrupting a function of a built-in microphone and establishing a third route to receive a voice signal through a microphone included in the earphone when the earphone has the microphone attached thereto; an audio processing unit for processing a voice signal output to the built-in speaker and a voice signal input from the microphone; and a headset controller for controlling operations of the units, and outputting the control signal according to a sense signal output from earphone connection unit.

In accordance with another aspect of the present invention, there is provided an operation method of a wireless headset, the method including sensing if an earphone is connected during a communication mode; outputting a voice signal through a built-in speaker, when it is sensed that an earphone is not connected; and outputting a voice signal through both the built-in speaker and an earphone when it is sensed that the earphone is connected.

The present invention will be more apparent from the following detailed description taken in conjunction with the accompanying drawings, in which:
FIG. 1 is a block diagram illustrating the constructions of a mobile terminal and a Bluetooth headset to which the present invention is applied;
FIG. 2 is a perspective view illustrating conventional mobile terminal and Bluetooth headset;
FIG. 3 is a flowchart illustrating the operation of a Bluetooth headset according to an embodiment of the present invention;
FIG. 4 is a perspective view illustrating the Bluetooth headset and an earphone according to an embodiment of the present invention;
FIG. 5 is a flowchart illustrating the operation of a Bluetooth headset according to another embodiment of the present invention; and
FIG. 6 is a perspective view illustrating the Bluetooth headset and an earphone according to another embodiment of the present invention.

Hereinafter, preferred embodiments of the present invention will be described with reference to the accompanying drawings. In the below description, particular items may be shown for providing a thorough understanding of the present invention. It will be understood by those skilled in the art that various changes in form and detail may be made within the scope of the present invention.

FIG. 1 is a block diagram illustrating the constructions of a mobile terminal and a Bluetooth headset to which the present invention is applied. In FIG. 1, reference numeral "100" represents a mobile terminal, and reference numeral "200" represents a Bluetooth headset. The mobile terminal 100 includes a terminal controller 105, a reception level measuring unit 110, a Bluetooth module 115, a key input unit 120, a memory unit 125, a data processing unit 130, an audio processing unit 135, a microphone 140, a speaker 145, and an RF processing unit 150.

The terminal controller 105 controls the entire operation of the mobile terminal 100. When a call is generated, the terminal controller 105 wirelessly transmits a signal notifying the Bluetooth headset 200 of the reception of a call through the Bluetooth module 115. The reception level measuring unit 110 measures the power level of a signal of the Bluetooth headset 200, which has been received by an RF reception unit of the Bluetooth module 115, under the control of the terminal controller 105. The Bluetooth module 115 includes an RF transmission unit, the RF reception unit, and a baseband processing unit (not shown). The RF transmission unit modulates a data packet for wireless transmission generated by the baseband processing unit to a predetermined frequency band, and amplifies and transmits the modulated data packet. The RF reception unit amplifies a signal of a predetermined frequency band, from all received frequency signal, while minimizing amplification of noise. After this, the RF reception unit down-converts the amplified signal into a lower frequency band, and applies the down-converted signal to the baseband processing unit. The baseband processing unit changes the formats of various host controller interface (HCl) data packets applied from the terminal controller 105, by adding an access code and a header to the data packets. Then, the baseband processing unit once more changes the changed data packet to a predetermined data packet for wireless transmission, and wirelessly transmits the resultant data packet with a predetermined frequency band via the RF transmission unit.

Also, the baseband processing unit changes a data packet received through the RF reception unit to an HCl packet, and applies the HCl packet to the terminal controller 105 which acts as a host. Meanwhile, the Bluetooth module 115 includes a link controller (not shown), which controls the Bluetooth module 115 according to a command of a command packet applied from the terminal controller 105. Also, the Bluetooth module 115 transmits information about the Bluetooth headset 200, which has been received from the baseband processing unit, to the terminal controller 105 (which acts as a host) as an HCl packet. The key input unit 120 includes a plurality of numeric keys and function keys for performing various functions. The key input unit 120 outputs an electrical signal corresponding to data of a key when the key is pressed by the user. The memory unit 125 includes a ROM (Read Only Memory) and/or a RAM (Random Access Memory) for storing a plurality of programs and data. The memory stores various bell sounds, MP3, moving pictures, etc. to be transmitted by the mobile terminal, and also stores various data such as a telephone book, messages, etc, as is known.

The audio processing unit 135 is generally configured with a vocoder, and operates under the control of the controller 105. The audio processing unit 135 decodes encoded voice data, received from the RF processing unit 150, to convert the encoded voice data into an electrical voice signal, and outputs the electrical voice signal to the speaker 145. Then, the speaker 145 converts the received electrical voice signal into an audible sound, and outputs the audible sound. Also, the audio processing unit 135 encodes an electrical voice signal received from the microphone 140, and outputs the encoded signal to the RF processing unit 150. When the RF processing unit 150 receives a frequency signal, which is carried through a wireless channel of a frequency band, through an antenna under the control of the controller 105, the RF processing unit 150 down-converts the received signal, and outputs the down-converted signal to the controller 105 while differentiating the types of data. Data output from the RF processing unit 150 to the controller 105 include character data, a paging signal received through a paging channel, and a signaling signal.

Again referring to FIG. 1, the Bluetooth headset 200 includes a headset controller 205, an earphone connection unit 210 having an earphone connection sensor 210A, an audio processing unit 215, a route establishment unit 220, a microphone 225, a speaker 230, an earphone 235, a Bluetooth module 240, and a button input unit 245.

The headset controller 205 controls a voice communication operation of the Bluetooth headset 200 using Bluetooth wireless communication. Also, according to the present invention, the headset controller 205 receives a signal reporting that connection of the earphone 235 is sensed from the earphone connection unit 210. When receiving an earphone sensing signal, the headset controller 205 transmits, to the route establishment unit 220, a route establishment signal instructing the establishment of a route through which the connected earphone 235 can output a voice signal. The earphone connection unit 210 includes the earphone connection sensor 210A for determine whether or not the earphone 235 is connected. According to the present invention, when the earphone connection unit 210 determines that the earphone 235 is connected to the earphone connection unit 210 while a call is being received or while communication is being made using the Bluetooth headset 200, the earphone connection unit 210 functions to output a sound to the earphone 235, as well as to the speaker 230 included in the Bluetooth headset 200.

The audio processing unit 215 demodulates a voice signal, which has been received from the Bluetooth module 240, and outputs the demodulated voice signal to the speaker 230. According to the present invention, the audio processing unit 215 outputs a voice signal through the built-in speaker 230 in a communication mode. Also, when connection of the earphone 235 is sensed by the earphone connection unit 210, the audio processing unit 215 outputs a voice signal, which has been output through the built-in speaker 230, through both the built-in speaker 230 and the connected earphone 235. A signal, which has been converted into an electrical voice signal by the microphone 225, is transmitted to the mobile terminal 100 through the Bluetooth module 240.

According to the present invention, the route establishment unit 220 is connected to the audio processing unit 215, and receives a voice signal output from the audio processing unit 215. Also, when it is sensed that the earphone 235 is connected to the earphone connection unit 210, the route establishment unit 220 receives, from the headset controller 205, a control signal instructing the establishment of a route, through which a voice signal is output to both the built-in speaker 230 and the earphone 235. After this, the route establishment unit 220 performs a function of establishing a route, through which a voice signal is output to the earphone 235, as well as the microphone 225, according to the control signal.

The Bluetooth module 240 includes an RF transmission unit, an RF reception unit, and a baseband processing unit (not shown), and is connected to the headset controller 205 through the baseband processing unit of the Bluetooth module 240, so as to transmit/receive a control command and voice data to/from the terminal's transmitter using an HCl packet. The RF transmission unit of the Bluetooth headset 200 modulates a data packet for wireless transmission generated by the baseband processing unit to a predetermined frequency band, and amplifies and transmits the modulated data packet. The RF reception unit of the Bluetooth headset 200 amplifies a signal of a predetermined frequency band, from all received frequency signals, while minimizing amplification of noise. After this, the RF reception unit down-converts the amplified signal into a lower frequency band, and applies the down-converted signal to the baseband processing unit.

The baseband processing unit of the Bluetooth headset 200 changes the formats of various HCl data packets applied from the headset controller 205, by adding an access code and a header to the data packets. Then, the baseband processing unit once more changes the changed data packet to a predetermined data packet for wireless transmission, and wirelessly transmits the resultant data packet with a predetermined frequency band via the RF transmission unit. Also, the baseband processing unit changes a data packet received through the RF reception unit to an HCl packet, and applies the HCl packet to the headset controller 205. The button input unit 245 may include a plurality of keys for interfacing with the user. The button input unit 245 included in the Bluetooth headset 200 is constructed such that upon reception of a call, when the Bluetooth headset 200 is located within a predetermined distance from the mobile terminal 100, the user can communicate by adjusting the button input unit 245.

As described above, the mobile terminal and the Bluetooth headset shown in FIG. 1 each include a Bluetooth module, respectively, and transmit/receive a signal reporting transmission/reception of a call through the Bluetooth modules. Also, the Bluetooth headset according to the present invention includes the earphone connection unit and the route establishment unit. The earphone connection unit functions to sense the connection of an earphone jack, and functions to output a voice signal, which is output through the built-in speaker and through a connected earphone, in addition to the built-in speaker, when it is sensed that the earphone is connected. Also, when it is sensed that the earphone is connected, the route establishment unit functions to establish a route for outputting a voice signal, which has been output through the built-in speaker, through both the built-in speaker and the earphone.

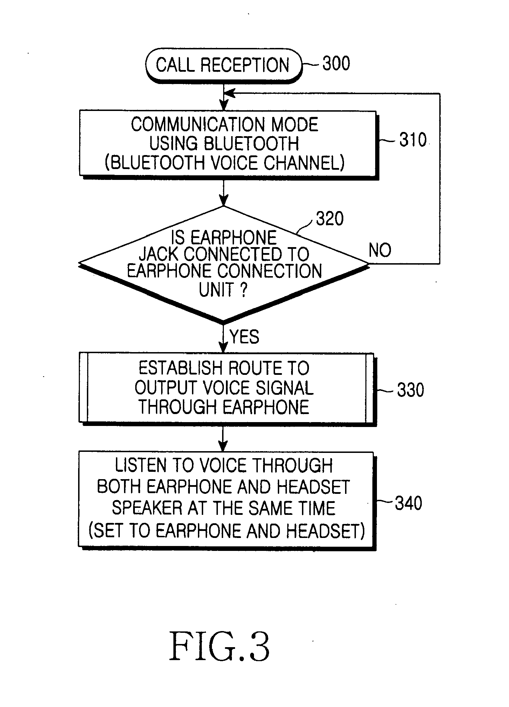

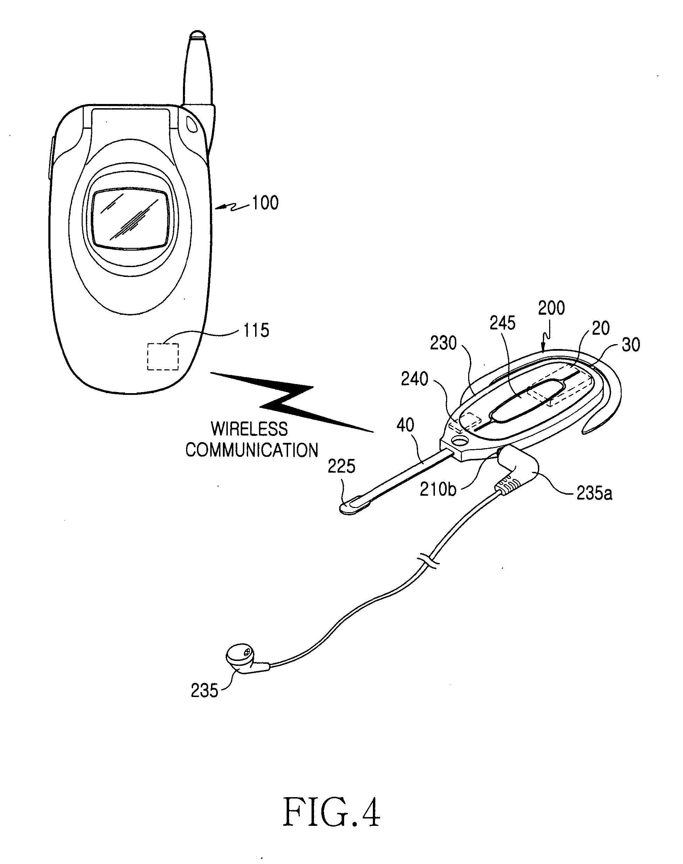

FIG. 3 is a flowchart illustrating the operation of a Bluetooth headset according to the present invention, and FIG. 4 is a perspective view illustrating the Bluetooth headset and an earphone according to the present invention. When it is determined that the controller 105 of the mobile terminal receives a call, a bell sound reporting the reception of a call is output. In this case, when the Bluetooth headset 200 is located within a predetermined distance from the mobile terminal 100, the controller 205 of the Bluetooth headset receives a signal reporting the reception of the call from Bluetooth module 115 included in the mobile terminal 100, through the Bluetooth module 240 included in the Bluetooth headset 200. After this, the headset controller 205 outputs a signal indicating the reception of the call simultaneously with the mobile terminal 100 (step 300). In step 310, the headset controller 205 receives a signal from the button input unit 245 of the Bluetooth headset 200 to make communication, according to the adjustment of the user, and operates in a communication mode using the Bluetooth headset. In step 320, the headset controller 205 determines whether the earphone connection sensor 210A of the earphone connection unit 210 senses the connection of the earphone 235 while communication is being performed. The perspective view of FIG. 4 shows the case in which the earphone connection unit 210 includes a connection hole or jack 210b of a predetermined size formed at a lateral surface.

As a result of the determination, when it is sensed that the earphone 235 is connected to the earphone connection unit 210 through the connection hole, the headset controller 205 proceeds to step 330. In step 330, the headset controller 205 transmits a control signal to the route establishment unit 220 so as to establish a route for outputting a voice signal, which has been output through the built-in speaker 230, through the earphone 235, as well as through the built-in speaker 230. If it is determined in step 320 that an earphone is not sensed, meaning that no earphone is connected through the connection hole, the operation of outputting a voice signal through the built-in speaker is continued. When receiving the control signal from the headset controller 205, the route establishment unit 220 establishes a route to output a voice signal, which is output through the built-in speaker 230, through the earphone 235, as well as the built-in speaker 230, based on the control signal. When the route establishment unit 220 has established a route to output a voice signal through both the earphone 235 and the built-in speaker 230, the headset controller 205 outputs a voice signal through the speaker 230 and the earphone 235 at the same time. Accordingly, at step 340, the user can listen to the voice signal through both the speaker 230 and the earphone 235 at the same time.

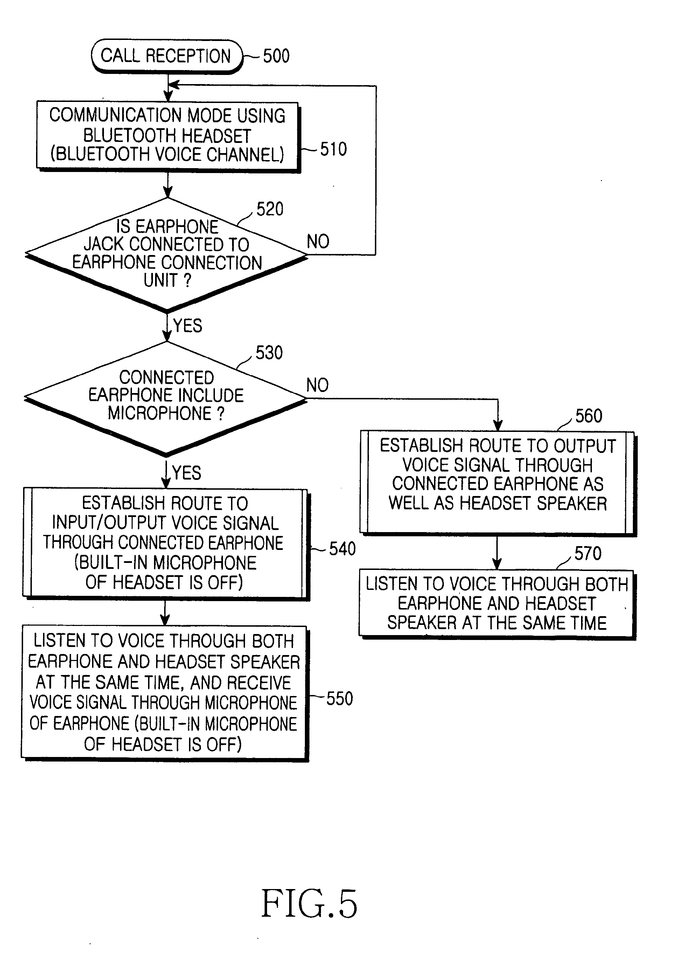

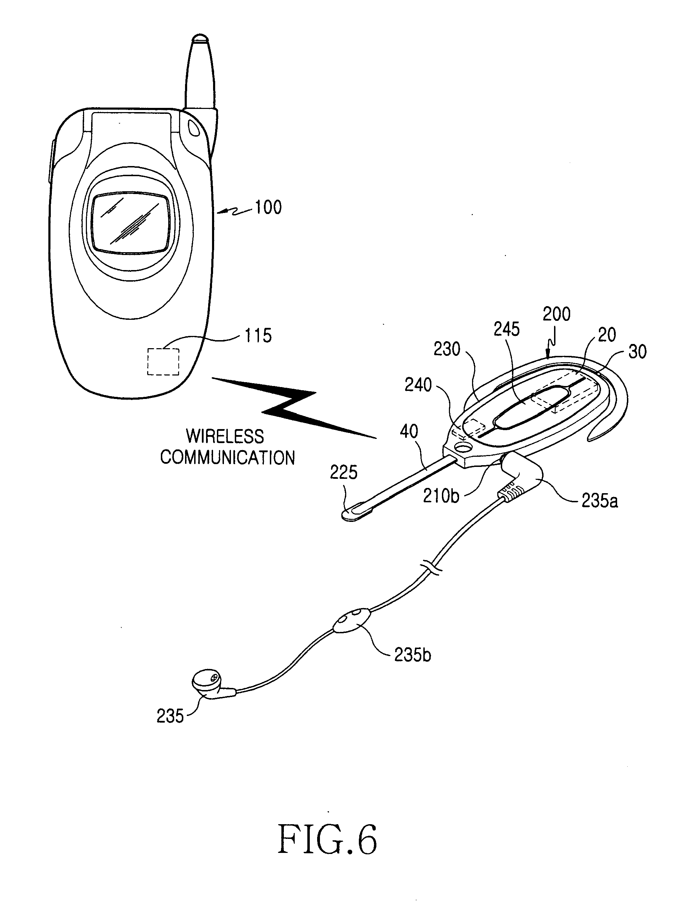

FIG. 5 is a flowchart illustrating the operation of a Bluetooth headset according to another embodiment of the present invention, and FIG. 6 is a perspective view illustrating the Bluetooth headset and an earphone according to the operation of Fig. 5. The operations of steps 500 to 520, in which reception of a call by a mobile terminal is reported and communication is made by using the Bluetooth headset, are similar to the operations of steps 300 to 320 described with reference to FIG. 3. After this, when the headset controller 205 senses that an earphone 235 is connected to the earphone connection unit 210 through the earphone jack connection hole, the headset controller 205 determines whether the connected earphone has a microphone (step 530). When it is determined in step 530 that the connected earphone has a microphone, the headset controller 205 outputs a control signal to notify the route establishment unit 220 that the connected earphone has a microphone (step 540). When receiving the control signal, the route establishment unit 220 interrupts the on-going function of receiving a voice signal of the user through the built-in microphone of the Bluetooth headset 200, and establishes a route to receive the voice signal of the user through the microphone 235b included in the connected earphone. In contrast, if it is determined in step 530 that the connected earphone does not have a microphone, the headset controller 205 performs the procedure similar to that described in steps 330 and 340 of FIG. 3. Based on a route established in step 540, the headset controller 205 outputs a voice through the connected earphone and the built-in speaker of the Bluetooth headset and receives a user's voice through the microphone 235b included in the earphone.

According to this embodiment of the present invention described with reference to FIGs. 5 and 6, when it is sensed that an earphone is connected to the Bluetooth headset while communication is being performed using the Bluetooth headset, it is determined whether the connected earphone has a microphone. When it is determined that the connected earphone has a microphone, the controller of the Bluetooth headset controls the route establishment unit such that the route establishment unit interrupts the function of the built-in microphone included in the Bluetooth headset, and establishes a route to receive a voice of the user through the microphone included in the connected earphone. Accordingly, the user can listen to a voice through both the earphone and the built-in speaker of the Bluetooth headset, and can input user's voice through the microphone included in the earphone.

While the present invention has been shown and described with reference to certain preferred embodiments thereof, it will be understood by those skilled in the art that various changes in form and details may be made therein without departing from the scope of the invention as defined by the appended claims. For instance, the embodiments of the present invention has been described with respect to a Bluetooth headset, but the present invention can be applied to headset apparatuses employing various wireless communication schemes, other than the Bluetooth communication scheme. Accordingly, the scope of the invention is not to be limited by the above embodiments but by the claims.

## Claims

1. A wireless headset apparatus comprising:
an earphone connection unit including an earphone connection hole, to which an earphone can be connected, so as to output a sense signal when the earphone is connected to the earphone connection hole;
a route establishment unit for establishing one of a first route to output a voice to only a built-in speaker and a second route to output a voice to both the built-in speaker and the earphone connection unit depending on a control signal, and for interrupting a function of a built-in microphone and establishing a third route to receive a voice signal through a microphone included in the earphone when the earphone has the microphone attached thereto;
an audio processing unit for processing a voice signal output and a voice signal input; and
a headset controller for controlling operations of the units, and outputting the control signal according to a sense signal output from earphone connection unit.

2. The apparatus as claimed in claim 1, wherein the earphone connection unit includes an earphone-jack sensor, which senses that an earphone jack is connected.

3. An operation method of a wireless headset, the method comprising the steps of:
sensing if an earphone is connected during a communication mode;
outputting a voice signal through a built-in speaker, when it is sensed that an earphone is not connected; and
outputting a voice signal through both the built-in speaker and an earphone when it is sensed that the earphone is connected.

4. An operation method of a wireless headset, the method comprising the steps of:
sensing if an earphone is connected during a communication mode;
determining if the earphone includes a microphone, when it is sensed that the earphone is connected; and
outputting a voice signal through both a built-in speaker and the earphone, interrupting a function of a built-in microphone included in the wireless headset, and receiving a voice signal through the microphone included in the earphone, when it is determined that the earphone includes the microphone.
